# EUROPEAN PATENT SPECIFICATION

(11) **EP 4 390 706 B1**
(45) Date of publication and mention of the grant of the patent: **04.11.2026**
(21) Application number: 22874669.9
(22) Date of filing: 16.09.2022
(51) Int. Cl.: G06N 3/063, G06F 9/50, G06F 12/0813, G06F 12/0862

(54) **EMBEDDED VECTOR PREFETCHING METHOD, APPARATUS AND SYSTEM, AND RELATED DEVICE**
EINGEBETTETES VEKTORVORAUSLADEVERFAHREN, VORRICHTUNG UND SYSTEM SOWIE ZUGEHÖRIGE VORRICHTUNG
PROCÉDÉ, APPAREIL ET SYSTÈME DE PRÉ-EXTRACTION DE VECTEUR INCORPORÉ, ET DISPOSITIF ASSOCIÉ

(30) Priority: 29.09.2021 CN 202111157670
(43) Date of publication of application: 26.06.2024
(73) Proprietor: Huawei Technologies Co., Ltd., Shenzhen, Guangdong 518129 (CN)
(72) Inventor: DUAN, Qihang, Shenzhen, Guangdong 518129 (CN)
(74) Representative: Gill Jennings & Every LLP
(86) International application number: PCT/CN2022/119301
(87) International publication number: WO 2023/051282

(56) References cited:
- WO-A1-2005/098628
- CN-A- 101 034 412
- CN-A- 102 737 064
- CN-A- 102 737 064
- CN-A- 105 721 390
- CN-A- 105 721 390
- CN-A- 107 766 258
- CN-A- 111 767 364
- CN-A- 111 767 364
- CN-A- 114 936 087
- US-A1- 2018 314 524
- US-A1- 2019 073 580

## Description

### TECHNICAL FIELD

The present invention relates to the field of deep learning, and in particular, to an embedding vector prefetching method and apparatus, a system, and a related device.

### BACKGROUND

Currently, deep learning is developing rapidly and is widely used in various industries. In particular, applying the deep learning to a recommendation system has achieved a good effect.

In a deep learning-based recommendation system, an embedding vector technology is widely used. In the embedding technology, a user feature obtained by the recommendation system is used as a sparse vector, and the sparse vector is converted into a dense vector through an embedding table. The embedding table is stored in a memory of a server associated with the recommendation system, and a row in the embedding table is an embedding vector. When a recommendation model performs deep learning, a process in which a processor places the embedding vector in the embedding table required for training from the memory of the server into an accelerator is referred to as prefetching. Currently, in a prefetching process, most embedding vectors are stored on a single accelerator. Because a memory capacity of the accelerator is limited, embedding vector overflow occurs, and therefore an exception occurs in the system.

CN102737064A discloses a file caching method and device. CN105721390A discloses an encryption storage method and apparatus. CN111767364A discloses a data processing method, device and equipment.

### SUMMARY

This application provides an embedding vector prefetching method and apparatus, a system, and a related device, to resolve a problem that in an existing prefetching process, most embedding vectors are stored on a single accelerator, and because a memory capacity of the accelerator is limited, an embedding vector capacity exceeds the memory capacity of the accelerator, causing a system exception. The invention is set out in the appended set of claims.

### BRIEF DESCRIPTION OF DRAWINGS

To describe technical solutions in embodiments of the present invention more clearly, the following briefly describes accompanying drawings used in describing embodiments.
FIG. 1 is a schematic block diagram of an embedding vector prefetching application system according to an embodiment of the present invention;
FIG. 2 is a flowchart of an embedding vector prefetching method according to an embodiment of the present invention; and
FIG. 3 is a schematic diagram of a structure of an embedding vector prefetching apparatus according to an embodiment of the present invention.

### DESCRIPTION OF EMBODIMENTS

To resolve a problem that a system exception is caused by embedding vector overflow and a limited memory capacity of an accelerator, this application provides an embedding vector prefetching method, so that embedding vectors in an embedding table can be evenly allocated to all accelerators, to avoid an exception in a system.

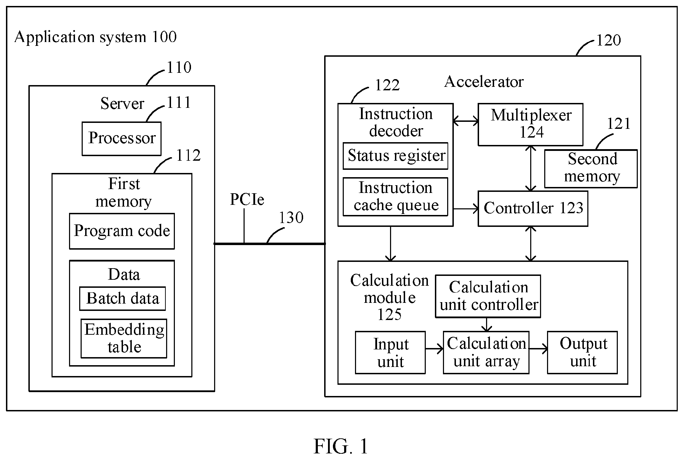

FIG. 1 is a schematic block diagram of an embedding vector prefetching application system according to this application. The application system 100 includes a server 110, an accelerator 120, and a peripheral component interconnect express 130. The server 110 and the accelerator 120 are interconnected through a high-speed bandwidth such as the PCIe 130, and the accelerators 120 are connected through the PCIe 130 or a network.

The server 110 is a device that has both a computing capability and a storage capability, and may be a physical server such as an X86 server or an ARM server, or may be a virtual machine (VM) implemented based on a general-purpose physical server in combination with a network function virtualization (NFV) technology. The virtual machine is a complete computer system that is simulated by software, that has a complete hardware system function, and that runs in a completely isolated environment, for example, a virtual device in cloud computing. This is not specifically limited in this application. In a possible implementation, the server 110 includes a processor 111 and a first memory 112. It should be understood that the server shown in FIG. 1 may include more or fewer components, or a plurality of components in the server shown in FIG. 1 may be integrated into one component.

The processor 111 may include at least one general-purpose processor, for example, a central processing unit (CPU), or a combination of the CPU and a hardware chip. The hardware chip may be an application-specific integrated circuit (ASIC), a programmable logic device (PLD), or a combination thereof. The PLD may be a complex programmable logic device (CPLD), a field-programmable gate array (FPGA), a generic array logic (GAL), or any combination thereof.

The processor 111 is configured to process a data access request from the server or another system, and is further configured to process a request generated in the system. For example, when receiving a write data request sent by the server 110 through a front-end port, the processor 111 temporarily stores data in the write data request in the first memory 112. When a total amount of data in the first memory 112 reaches a specific threshold, the processor 111 sends, through a back-end port, the data stored in the first memory to a hard disk for persistent storage. After receiving the request, the processor may further read the data, read a salt and batch data, and similarly store the data in the first memory.

The first memory 112 refers to an internal memory that directly exchanges data with the processor. The first memory 112 may read and write data at any time, and has a high speed. The first memory 112 is used as a temporary data memory of an operating system or another running program. The memory includes at least two types of memories. For example, the memory may be a random access memory, or may be a read-only memory (ROM). For example, the random access memory is a dynamic random access memory (DRAM), or a storage class memory (SCM). The DRAM is a semiconductor memory, which belongs to a volatile memory device, like most random access memory (RAM). The first memory may further include another random access memory, for example, a static random access memory (SRAM). The read-only memory, for example, may be a programmable read-only memory (PROM), an erasable programmable read-only memory (EPROM), or the like. In addition, the first memory may further be a dual in-line memory module or a dual in-line memory module (DIMM for short), in other words, a module including a dynamic random access memory (DRAM), or may be a solid state disk (SSD).

The first memory 112 may be configured to store data information, for example, batch data and an embedding table. Therefore, a rate of reading the foregoing data information is high. The first memory may be further configured to store program code. The processor reads the data stored in the first memory and runs the program code. The processor 111 runs the program code stored in the first memory to manage the hard disk. The program code in the first memory 112 in FIG. 1 includes units corresponding to an obtaining unit, a hash operation unit, a comparison unit, and a data output unit.

The accelerator 120 may be a graphics processing unit (GPU), a neural-network processor (NPU), or another type of physics processing unit (PPU). In a possible implementation, the accelerator 120 includes a second memory 121, an instruction decoder 122, a controller 123, a multiplexer 124, and a calculation module 125.

The second memory 121 is configured to store data information. The second memory 121 has a similar structure and function to the first memory 112, but differs only in a memory capacity. A cache further exists in the second memory, and an original meaning of the cache is a RAM in which access speed is faster than that of a general random access memory. The cache is a level-1 memory between a main memory and the processor, and includes static memory chips (SRAM). The cache has a small capacity but a high speed, which is close to speed of the processor. Information scheduling and transferring between the cache and a main memory are automatically performed by hardware.

The instruction decoder 122 is configured to receive an instruction sent by the processor, and decode the instruction sent by the processor, to obtain a decoding result. The decoding result is used for indicating addresses and operation types of a plurality of pieces of to-be-calculated data. In a more specific embodiment, the instruction decoder 122 includes a status register and an instruction cache queue. The status register is addressable space of a memory. When the processor sends a read request to the address, the instruction decoder 122 is instructed to return, to the processor, a working state of the accelerator stored in the status register.

The controller 123 receives the addresses of the plurality of pieces of data sent by the instruction decoder 122 and a calculation result output by the calculation module 125.

The multiplexer 124 is configured to select, based on a control signal of the instruction decoder 122, to send a memory access command of the controller 123 or the processor to the memory, and obtain, from the memory, data that needs to be sent to the controller 123 and the processor.

The calculation module 125 is configured to perform corresponding calculation on the plurality of pieces of data based on the operation types. The calculation module 125 includes a calculation unit, an input unit, a calculation unit array, and an output unit. The calculation unit is configured to control the calculation unit array to execute an instruction to perform processing operation on a corresponding data. The input unit is configured to cache data that is prepared for executing the instruction. The output unit is configured to cache the calculation result obtained after the calculation unit array executes the instruction.

In the application system, the first memory 112 and the second memory 121 have similar functions, but differ only in memory capacities. A capacity of the second memory is less than a capacity of the first memory. Because a capacity of the embedding table usually exceeds the capacity of the second memory, the embedding table can be stored only in the first memory. The second memory 121 is located in the accelerator 120, and may store part embedding vectors sent by the processor, embedding vector addresses, and communication information between the accelerators.

It should be understood that the accelerator 120 shown in FIG. 1 may include more components or fewer components, or the accelerator may integrate a plurality of components into one component. There are a plurality of structures of the accelerator. A specific structure of the accelerator is not specifically limited in this application.

The peripheral component interconnect express 130 (PCIe) is designed to replace an old bus standard. The PCIe is a high-speed serial point-to-point dual-channel high-bandwidth transmission. Connected devices are allocated with exclusive channel bandwidth, bus bandwidth is not shared, and active power management, error reporting, end-to-end reliable transmission, hot swap, and quality of service are supported.

It should be understood that the peripheral component interconnect express 130 shown in FIG. 1 has a plurality of specifications, ranging from PCIe x1 to PCIe x32, and the like. A type of the peripheral component interconnect express is not specifically limited in this application.

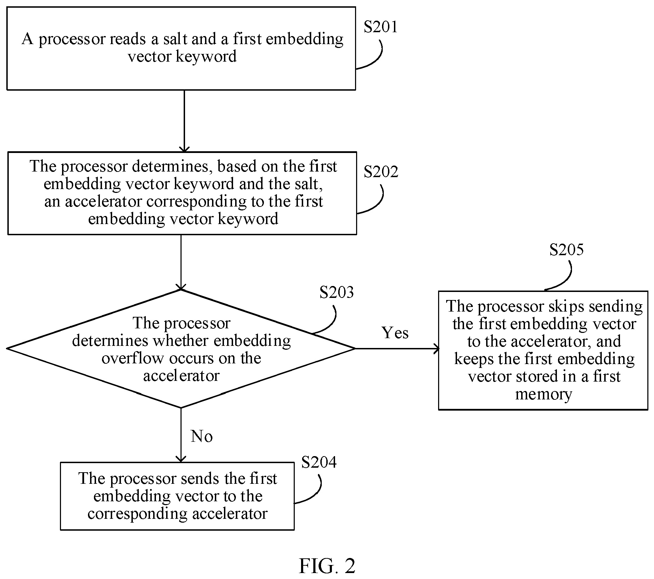

FIG. 2 is a flowchart of an embedding vector prefetching method according to this application. The embedding vector prefetching method may be applied to the application system shown in FIG. 1. The method includes the following steps.

There are m embedding vector keywords in batch data read by a processor. Operations that processor sends, from a first memory to a second memory, an embedding vector corresponding to each embedding vector keyword are the same. Operation steps are as follows:

S201: The processor reads a salt and a first embedding vector keyword.

In a possible implementation, the salt may be a character string including one or more randomly generated characters, or a character string stored in a configuration file.

In a possible implementation, not covered by the claims, the first embedding vector keyword is any one of the embedding vector keywords in the batch data. The batch data may include a keyword corresponding to each embedding vector in an embedding table. In a case in which the batch data includes a plurality of embedding vector keywords, if the plurality of embedding vector keywords have duplicate embedding vector keywords, the duplicate embedding vector keywords may be removed, and if the plurality of embedding vector keywords have unused embedding vector keywords, the unused embedding vector keywords may be deleted. The batch data may be obtained by reading from a disk or a network by the processor.

S202: The processor determines, based on the first embedding vector keyword and the salt, an accelerator corresponding to the first embedding vector keyword.

The process that the processor determines, based on the first embedding vector keyword and the salt, accelerator information corresponding to the first embedding vector keyword includes the following step S211 to step S213.

S211: The processor determines a first hash value based on the first embedding vector keyword.

The processor inputs the first embedding vector keyword into a first hash algorithm, to determine the first hash value. The first hash algorithm may be a message digest algorithm (message digest algorithm md5, MD5), a secure hash algorithm (secure hash algorithm 1, SHA-1), or the like. It should be understood that the first hash algorithm further includes a plurality of different forms, such as SHA-224 and SHA-256. The first hash algorithm is not specifically limited in this application.

In a more specific implementation, the first hash algorithm may be represented as:$ADD 1 = hash \left(key\right) .$

The ADD1 represents the first hash value, the key represents the first embedding vector keyword, and the hash () function represents a mapping relationship between the first embedding vector keyword and the first hash value. When the processor inputs different embedding vector keywords into a same first hash algorithm, a length of an obtained output value is fixed. It may be understood that if the first embedding vector keyword is the same, specific algorithms used in the first hash algorithm are different, and the first hash values are generally different.

S212: The processor determines a second hash value based on the salt and the first hash value.

The processor needs to combine the salt and the first hash value. Manners in which the processor combines the salt and the first hash value may include: (1) performing character string concatenation on the first hash value and the salt to obtain a salted first hash value; and (2) inserting the salt into one or more positions in the first hash value, to obtain a salted first hash value. It should be understood that a manner of combining the salt and the first hash value is a character string combination manner. In addition to the foregoing two manners, there are many different forms. The manner of combining the salt and the first hash value is not specifically limited in this application. Then, the processor inputs the salted first hash value into a second hash algorithm. The second hash algorithm may be a message digest algorithm, a secure hash algorithm, or the like. It should be understood that the second hash algorithm further includes a plurality of different representation forms, such as SHA-224 and SHA-256. The second hash algorithm is not specifically limited in this application.

In a more specific implementation, the second hash algorithm may be represented as: $ADD 2 = hash \left(hash \left(key\right)⊗salt\right) .$

The ADD2 represents the second hash value, the salt represents the salt, the key represents the first embedding vector keyword, the hash (key) ⊗ *salt* is the salted first hash value, and the hash () function represents a mapping relationship between the salted first hash value and the second hash value.

S213: The processor determines, based on the second hash value, the accelerator corresponding to the first embedding vector keyword.

The processor converts the second hash value into a digital form, and substitutes the second hash value and a quantity of accelerators in a system into a formula of a modulo n mapping relationship, to determine the accelerator information corresponding to the first embedding vector keyword.

In a more specific implementation, the modulo n mapping relationship may be represented as: $dev = hash \left(hash \left(key\right)⊗salt\right) mod n .$

The dev represents the accelerator information, and hash (hash (key) ⊗ *salt)* is the second hash value. In this implementation, the second hash value is represented in a digital form, n is a quantity of accelerators in a system, and mod represents a mapping relationship between the second hash value and the accelerator.

S203: The processor determines whether embedding vector overflow occurs on the accelerator. If no overflow occurs, step S204 is performed; or if the overflow occurs, step S205 is performed.

After obtaining the accelerator corresponding to the first embedding vector keyword, the processor first determines whether the embedding vector overflow occurs on the accelerator, and skips sending a corresponding first vector to the accelerator. The processor may obtain a quantity of embedding vectors that can be stored in each accelerator, in other words, a capacity of the second memory. The processor compares the quantity of embedding vectors allocated to each accelerator with the capacity of the second memory of the accelerator. If capacities of second memories of all the accelerators are not less than the quantity of embedding vectors allocated to a corresponding accelerator, in other words, if no embedding vector overflow occurs, the processor performs step S204. When the quantity of embedding vectors is greater than the capacity of the second memory of the accelerator, the embedding vector overflow occurs, and the processor performs step S205.

In another possible implementation, the processor calculates a standard deviation based on the quantity of embedding vectors corresponding to each accelerator, sets a threshold, and compares the standard deviation with the threshold. If the standard deviation is less than or equal to the threshold, no embedding vector overflow occurs, and the processor performs step S204. If the standard deviation is greater than the threshold, the embedding vector overflow occurs, and the processor performs step S205.

S204: The processor sends the first embedding vector to the corresponding accelerator.

In a possible implementation, the processor determines that the capacities of the second memories of all the accelerators are not less than the quantity of embedding vectors allocated to the corresponding accelerator. The processor finds a first embedding vector corresponding to the first embedding vector keyword from the embedding table, and sends the embedding vector to the corresponding accelerator.

In a more specific implementation, the processor may send the first embedding vector to a cache in the second memory of the corresponding accelerator through a PCIe. The processor may further send an address of the embedding vector and communication information between the accelerator to each accelerator.

S205: The processor skips sending the first embedding vector to the accelerator, and keeps the first embedding vector stored in the first memory.

In a possible implementation, the processor determines that the embedding vector overflow occurs on the accelerator. The processor skips sending the first embedding vector corresponding to the first embedding vector keyword in the embedding table to the accelerator. The first embedding vector is kept stored in the first memory of a server.

In a specific implementation, after completing calculation on each embedding vector keyword in the batch data, the processor may obtain an accelerator corresponding to each embedding vector keyword. The processor may collect statistics on a capacity of a second memory of each accelerator, and compare the capacity with a quantity of embedding vectors allocated to each accelerator. If the quantity of embedding vectors is greater than the capacity of the second memory of the accelerator, the processor may read a new salt, store the new salt in a configuration file, and repeat steps S201 to S205 by using the new salt, to recalculate a correspondence between each embedding vector keyword and the accelerator, until no embedding vector overflow occurs on all accelerators. If capacities of second memories of all accelerators are not less than the quantity of the embedding vectors allocated to the corresponding accelerator, the processor may send each embedding vector to the second memory of the corresponding accelerator.

In another specific implementation, after determining an accelerator corresponding to an embedding vector keyword in the batch data, the processor collects statistics on the capacity of the second memory of each accelerator, and compares the capacity with a capacity of an embedding vector allocated to each accelerator in this case. If the quantity of embedding vectors is greater than the capacity of the second memory of the accelerator, the processor may read a new salt, store the new salt in a configuration file, and repeat steps S201 to S205 by using the new salt, to recalculate a correspondence between each embedding vector keyword and the accelerator, until no embedding vector overflow occurs on all accelerators. Before comparison is performed, the processor may further send the embedding vector that is sent to the accelerator to the first memory of the server. If capacities of second memories of all accelerators are not less than the quantity of the embedding vector allocated to the corresponding accelerator, the processor sends, to the second memory of the corresponding accelerator through the PCIe, an embedding vector corresponding to a currently calculated embedding vector keyword. The processor continues to calculate an accelerator corresponding to a next embedding vector keyword in the batch data, and repeats the foregoing steps.

In another specific implementation, if capacities of second memories of all accelerators are not less than the quantity of embedding vectors allocated to the corresponding accelerator, the processor may further send addresses of the embedding vectors and communication information between the accelerators to each accelerator. In a recommendation system, when an accelerator performs model training, an embedding vector stored in another accelerator may need to be used. The processor extracts, based on an address of an embedding vector required for accelerator training, the embedding vector from a cache of an accelerator in which the embedding vector is located, and then sends, based on the communication information between the accelerators, the embedding vector to an accelerator that needs to perform an operation by using the embedding vector through the PCIe or the network.

In a specific embodiment, during training initialization of the recommendation system, the processor stores an embedding table in the first memory, reads batch data from a disk, and stores the batch data in the first memory of the server. The batch data includes a group of embedding vector keywords to be used in training, and each embedding vector keyword corresponds to a unique row in the embedding table, and corresponds to one embedding vector. The processor further parses the batch data, and performs deduplication and segmentation on the embedding vector keyword in the batch data. The batch data obtained by parsing is represented as keys = [2,5,9,12,15,17,20]. The processor randomly generates a salt, where the salt = 3. The processor calls the salt and the embedding vector keyword in the batch data, to calculate an accelerator corresponding to the embedding vector keyword. In this embodiment, the first hash algorithm is MD5. The processor first executes the first hash algorithm based on an embedding vector keyword in the batch data, for example, key = 2, and substitutes the embedding vector keyword into a formula ADD1 = hash (key), to obtain a first hash value ADD1 7f89. Then, the processor performs character string concatenation on the salt and the first hash value, to obtain a salted first hash value 7f893. The processor substitutes the salted first hash value into the second hash algorithm ADD2 = hash (hash (key) ⊗ *salt),* to obtain a salted second hash value 6595 through calculation. The processor substitutes the second hash value and a quantity of accelerators in the system into the modulo n mapping relationship dev = hash (hash (key) ⊗ *salt)* mod n and performs calculation through the modulo n mapping relationship, to learn that an accelerator corresponding to the embedding vector keyword is a device 5. Both the first hash value and the second hash value are represented in a hexadecimal form; and when the modulo n operation is performed, the second hash value is represented in a numeric form. An accelerator corresponding to another embedding vector in the batch data may be calculated in a same manner. Details are not described one by one. After accelerators corresponding to all embedding vector keywords are determined, the processor collects statistics on capacities of the embedding vectors allocated to the accelerators, and compares the capacities of the embedding vector with a capacity of a second memory of each accelerator and that are collected by the processor. It is determined that if the capacity of the embedding vector is greater than the capacity of the second memory of the accelerator, embedding vector overflow occurs. In this case, the embedding vector is kept stored in the first memory of the server. The processor randomly generates a new salt, stores the new salt in a configuration file, and repeats the foregoing steps by using the new salt, to recalculate a correspondence between the embedding vector keyword and the accelerator, until a salt is found, and a condition of balanced prefetching is met, so that no embedding vector overflow occurs on the accelerator. The processor finds a proper salt, determines that no embedding vector overflow occurs on each accelerator, and sends the embedding vector, an address of each embedding vector, communication information between the accelerators, and the like to the second memory of the corresponding accelerator through the PCIe. The prefetching process ends, and the training phase is entered.

When the accelerator performs recommendation model training, an embedding vector stored in another accelerator needs to be called. The processor extracts, based on an address that is of the embedding vector required for training and that is stored in the second memory of the accelerator, the embedding vector from a cache of a corresponding accelerator, and then sends, based on the communication information between the two accelerators, the embedding vector from an original accelerator to the accelerator through the PCIe.

In conclusion, it can be learned that the processor reads the salt and the batch data, determines the first hash value based on the first embedding vector keyword in the batch data, determines the second hash value based on the salt and the first hash value, and performs a modulo n operation based on the second hash value, to obtain an accelerator corresponding to the first embedding vector keyword. The processor sends the first embedding vector to the second memory of the corresponding accelerator. In the foregoing process, the processor uses the first hash algorithm and the second hash algorithm, and does not need to record a position of the embedding vector, does not need to record the embedding table in the accelerator, and does not need to search for the position of the embedding vector, thereby greatly improving an operation speed. In addition, the processor changes a fixed modulo n mapping relationship into a dynamic modulo n mapping relationship by including a character string in the first hash value, in other words, in a salting manner, so that a correspondence between the embedding vector and position information of the accelerator is changed, and a capacity of the embedding vector corresponding to each accelerator is not greater than a capacity of the second memory of the accelerator, thereby implementing balanced prefetching and avoiding cases such as the embedding vector overflow and a system exception.

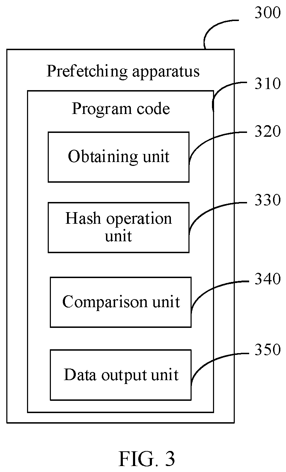

FIG. 3 is a schematic diagram of a structure of an embedding vector prefetching apparatus according to this application. Program code 310 in a prefetching apparatus 300 includes an obtaining unit 320, a hash operation unit 330, a comparison unit 340, and a data output unit 350.

Similarly, because there are m embedding vector keywords in batch data, a process that the apparatus sends, from a first memory to a second memory, an embedding vector corresponding to each embedding vector keyword is the same. The same process is as follows:

The obtaining unit is configured to obtain a salt and a first embedding vector keyword. If there are a plurality of embedding vector keywords, the obtaining unit may perform deduplication and segmentation on the embedding vector keywords, and store the embedding vector keywords in the first memory of a server. The obtained salt is a character string, which can be split and stored in a configuration file. If no configuration file is available, a salt is randomly generated. The obtaining unit is configured to input the salt and the batch data together to the hash operation unit.

The hash operation unit is configured to determine, based on the first embedding vector keyword and the salt, the accelerator corresponding to the first embedding vector keyword. In a possible implementation, the hash operation unit is configured to substitute the first embedding vector keyword into a first hash algorithm ADD1 = hash (key), to determine a first hash value. The ADD1 represents the first hash value, the key represents the first embedding vector keyword, and the hash () function represents a mapping relationship between the first embedding vector keyword and the first hash value. The first hash algorithm may be a message digest algorithm, a secure hash algorithm, or the like. It should be understood that the first hash algorithm is used as a basic hash algorithm and has many different forms. The first hash algorithm is not specifically limited in this application.

After the first hash value is obtained, the hash operation unit is configured to add the salt to the first hash value, and substitute a salted first hash value into a second hash algorithm ADD2 = hash (hash (key) ⊗ *salt*), to determine a second hash value. The ADD2 represents the second hash value, the salt represents a salt, the key represents the first embedding vector keyword, the hash (key) ⊗ *salt* is a salted first hash value, and the hash () function represents a mapping relationship between the salted first hash value and the second hash value. The second hash value and the first hash value have a same representation form. Manners of combining the salt and the first hash value may include: (1) The hash operation unit is configured to perform character string concatenation on the first hash value and the salt, to obtain a salted first hash value. (2) The hash operation unit is configured to insert the salt into one or more positions in the first hash value, to obtain a salted first hash value. The second hash algorithm may be a message digest algorithm, a secure hash algorithm, or the like. It should be understood that the second hash algorithm further includes a plurality of different forms, such as SHA-224 and SHA-256. The second hash algorithm is not specifically limited in this application. It should be understood that in addition to the foregoing two manners, there are many different forms of combining the salt and the first hash value. The manner of combining the salt and the first hash value is not specifically limited in this application.

After the second hash value is obtained, the hash operation unit is configured to convert the second hash value into a digital form, and then substitute the second hash value and a quantity of accelerators into a modulo n mapping relationship dev = hash (hash (key) ⊗ *salt*) mod n, to determine the accelerator corresponding to the first embedding vector keyword. The dev represents accelerator information, the salt means a salt, the key represents the first embedding vector keyword, hash (hash (key) ⊗ *salt*) is the second hash value, the n is a quantity of accelerators in a system, and the mod represents a mapping relationship between the second hash value and the accelerator.

The comparison unit is configured to determine whether overflow of embedding vectors allocated to each accelerator occurs. Manners of determining whether embedding vector overflow occurs may include: (1) The comparison unit is configured to compare capacities of the embedding vectors allocated to each accelerator with capacities of second memories of each accelerator. If the capacities of the embedding vectors are greater than the capacities of the second memories of the accelerators, the embedding vector overflow occurs. (2) The comparison unit is configured to calculate a standard deviation based on the quantity of embedding vectors corresponding to each accelerator, set a threshold, and compare the standard deviation with the threshold. If the standard deviation is greater than the threshold, the embedding vector overflow occurs.

The data output unit sends the first embedding vector to the second memory of the corresponding accelerator. In a possible implementation, the comparison unit is used to obtain a result that a memory capacity of each accelerator is not less than the capacity of the corresponding embedding vector, or the standard deviation is less than or equal to the threshold, to determine that no embedding vector overflow occurs. The data output unit is configured to send the first embedding vector, an embedding vector address, and communication information between the accelerators to a cache of the second memory of the corresponding accelerator.

In a possible implementation, the comparison unit is used to obtain a result that a memory capacity of an accelerator is less than the capacity of the corresponding embedding vector, or the standard deviation is greater than the threshold, to determine that the embedding vector overflows. The data output unit is configured to skip sending the first embedding vector to the corresponding accelerator. In a possible implementation, the obtaining unit is configured to re-obtain a new salt, store the new salt in the configuration file, and repeat the steps of the foregoing units, to recalculate a correspondence between the embedding vector keyword and the accelerator.

In a possible implementation, the embedding vector prefetching apparatus may further include a training unit.

In conclusion, the embedding vector prefetching apparatus may include an obtaining unit, a hash operation unit, a comparison unit, and a data output unit. With reference to the four units, a fixed modulo n mapping relationship may be converted into a dynamic modulo n mapping relationship, in other words, an accelerator corresponding to an embedding vector is changed, so that embedding vectors can be more evenly allocated to different accelerators, thereby resolving a problem that a second memory capacity of an accelerator is limited and the embedding vector overflow occurs.

For ease of better understanding of this application, in a specific application scenario, the following describes in detail with reference to an embedding vector prefetching application system and method in this application.

In a deep learning-based recommendation system, an embedding vector technology is widely used. In a recommendation model training process, a processor needs to send an embedding vector required for training to an accelerator in advance. During training initialization, because a capacity of an embedding table is generally greater than a capacity of a second memory of the accelerator, the processor reads the embedding table into a first memory of a server. The processor randomly generates a salt and reads a batch of data from a disk. The processor performs deduplication and segmentation on an embedding vector keyword that is in the batch data and that needs to be used for training, and further stores the batch data in the first memory of the server. The processor executes program code in the first memory, calls the salt and a first embedding vector keyword, and substitutes the salt and the first embedding vector keyword into a first hash algorithm, to determine a first hash value. The processor combines the first hash value and the salt in a concatenation manner, to obtain a salted first hash value, and substitutes the salted first hash value into a second hash algorithm, to determine a second hash value. The processor continues to execute the program code in the first memory, and substitutes the second hash value and a quantity of accelerators in a system into a modulo n mapping relationship, to determine an accelerator corresponding to the first embedding vector keyword.

After determining accelerators corresponding to all embedding vector keywords, the processor calculates a standard deviation based on a quantity of embedding vectors corresponding to each accelerator, sets a threshold, and compares the standard deviation with the threshold. If the standard deviation is greater than the threshold, the processor returns all the embedding vectors that are to be sent to the accelerator to the first memory. The processor re-reads a new salt, stores the new salt in the configuration file, and repeats the foregoing steps based on the new salt, to redetermine an accelerator corresponding to the embedding vector. The processor compares the standard deviation with the threshold again; and when determining that the standard deviation is less than or equal to the threshold and that no embedding vector overflow occurs, the processor sends the embedding vector to the second memory of the corresponding accelerator through a PCIe. In addition, the processor further sends, to each accelerator through the PCIe, an address of the embedding vector required for training of each accelerator and communication information between the accelerators. The prefetching process ends.

According to the foregoing methods for determining whether the embedding vector overflow occurs, it can be ensured that a loaded salt causes no embedding vector overflow in the training process, and normal running of the system is ensured. In addition, a process of sending information between the server and the accelerator can be masked, thereby improving overall operation efficiency.

After the processor sends the embedding vector to the accelerator, the accelerator starts to train a recommendation model. An embedding vector in another accelerator is required for training. The accelerator extracts the embedding vector from a cache of the another accelerator based on an address of the required embedding vector, and sends the extracted embedding vector to the required accelerator through the PCIe based on communication information between the accelerators. The accelerator assembles and trains the obtained embedding vector. After training is completed, the accelerator obtains gradient information of the embedding vector, sends the gradient information to each accelerator through the PCIe based on the communication information between the accelerators, finds a corresponding embedding vector based on the address of the embedding vector, adds the gradient information to an original embedding vector, and updates the embedding vector.

All salts in the foregoing training process are recorded. If training is performed again by using the same embedding vector, the processor may directly read a proper salt. When performing calculation by using different salts, the processor may compare distribution of embedding vectors in each accelerator, or compare corresponding training effects, and further perform condition filtering on the salts, so that a system can achieve a higher throughput rate by using a better salt.

In conclusion, according to the embedding vector prefetching method in this application, a hash value is changed in a salting manner, and an accelerator corresponding to an embedding vector keyword obtained by a hash operation is changed, so that no embedding vector overflow occurs on the accelerator and balanced prefetching is implemented. A hash operation speed is high, and a position of the embedding vector does not need to be recorded in a calculation process, the position of the embedding vector does not need to be searched, and an embedding table does not need to be synchronously recorded in each accelerator, thereby improving overall operation efficiency. The system can select a better salt through a plurality of training and condition filtering, so that the system can achieve a higher throughput rate and be applied to a case of parallel processing.

An embodiment, not covered by the claims, further provides a computing device. The computing device includes a processor and a memory. The memory stores computer instructions. The processor includes functions of each module shown in FIG. 1 to FIG. 3.

All or some of the foregoing embodiments may be implemented by using software, hardware, firmware, or any combination thereof. When software is used to implement embodiments, all or some of the foregoing embodiments may be implemented in a form of a computer program product. The computer program product includes at least one computer instruction. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage node, such as a server or a data center, including at least one usable medium set. The usable medium may be a magnetic medium (for example, a floppy disk, a hard disk, or a magnetic tape), an optical medium (for example, a high-density digital video disc (DVD)), or a semiconductor medium. The semiconductor medium may be an SSD.

## Claims

1. An embedding vector prefetching method, comprising:
reading, by a processor (111), a salt and a first embedding vector keyword;
determining, by the processor based on the salt and the first embedding vector keyword, an accelerator corresponding to the first embedding vector keyword, comprising:
determining, by the processor (111), a first hash value based on the first embedding vector keyword;
determining, by the processor (111), a second hash value based on the salt and the first hash value;
converting, by the processor (111), the second hash value into a digital form, obtaining a quantity n of accelerators in a system, and substituting the second hash value and the quantity n into a modulo n mapping relationship, to determine the accelerator corresponding to the first embedding vector keyword; and
determining, by the processor (111), whether embedding vector overflow occurs on the accelerator (120), and sending, by the processor, a first embedding vector to the accelerator (120) if no embedding vector overflow occurs; or skipping sending, by the processor (111), a first embedding vector to the accelerator (120), and keeping the first embedding vector stored in a first memory (112), if the embedding vector overflow occurs.

2. The method according to claim 1, wherein
the salt is a character string comprising one or more randomly generated characters, or a character string stored in a configuration file.

3. The method according to claim 1 or claim 2, wherein the determining, by the processor (111), a first hash value based on the first embedding vector keyword comprises:
inputting, by the processor, the first embedding vector keyword into a first hash algorithm, to determine the first hash value, wherein
the first hash algorithm comprises a message digest algorithm or a secure hash algorithm.

4. The method according to any preceding claim, wherein the determining, by the processor (111), a second hash value based on the salt and the first hash value comprises:
combining, by the processor (111), the salt and the first hash value, to obtain a salted first hash value; and
inputting, by the processor (111), the salted first hash value into a second hash algorithm, to determine the second hash value.

5. The method according to claim 4, wherein the combining, by the processor, the salt and the first hash value, to obtain a salted first hash value comprises:
performing, by the processor (111), character string concatenation on the first hash value and the salt, to obtain the salted first hash value.

6. The method according to claim 4, wherein the combining, by the processor (111), the salt and the first hash value, to obtain a salted first hash value comprises:
inserting, by the processor (111), the salt into one or more positions in the first hash value, to obtain the salted first hash value.

7. The method according to any one of claims 1 to 6, wherein
the sending, by the processor (111), a first embedding vector to the accelerator (120) if no embedding vector overflow occurs comprises:
if no embedding vector overflow occurs, finding, by the processor (111), the corresponding first embedding vector from an embedding table based on the first embedding vector keyword, and sending the first embedding vector to a cache of the accelerator (120); and
the skipping sending, by the processor, a first embedding vector to the accelerator, and keeping the first embedding vector stored in a first memory, if the embedding vector overflow occurs comprises:
if the embedding vector overflow occurs, skipping sending, by the processor, the first embedding vector to the accelerator, reading a new salt, and storing the new salt in a configuration file.

8. The method according to claim 1, wherein the modulo n mapping relationship is represented as:$dev = hash \left(hash\left(key\right)⊗salt\right) mod n ,$ where dev represents the accelerator information, and hash (hash (key) ⊗ *salt*) is the second hash value.

9. The method according to claim 8, wherein mod represents a mapping relationship that maps the second hash value to the accelerator.

10. An embedding vector prefetching apparatus (300), wherein the apparatus (300) comprises:
an obtaining unit (320), configured to obtain a salt and a first embedding vector keyword;
a hash operation unit (330), configured to determine, based on the salt and the first embedding vector keyword, an accelerator corresponding to the first embedding vector keyword, the determining comprising:
determining a first hash value based on the first embedding vector keyword;
determining a second hash value based on the salt and the first hash value;
converting the second hash value into a digital form, obtaining a quantity n of accelerators in a system, and substituting the second hash value and the quantity n into a modulo n mapping relationship, to determine the accelerator corresponding to the first embedding vector keyword;
a comparison unit (340), configured to determine whether embedding vector overflow occurs on the accelerator; and
a data output unit (350), configured to: if no embedding vector overflow occurs, send a first embedding vector to the accelerator; or if the embedding vector overflow occurs, skip sending a first embedding vector to the accelerator.

11. The apparatus according to claim 10, wherein the salt is a character string comprising one or more randomly generated characters, or a character string stored in a configuration file.

12. The apparatus according to claim 10 or claim 11, wherein the hash operation unit (330) is configured to input the first embedding vector keyword into a first hash algorithm, to determine the first hash value, wherein the first hash algorithm comprises a message digest algorithm or a secure hash algorithm.

13. A computer-readable storage medium comprising instructions which, when executed by a computing device, cause the computing device to carry out the method according to any one of claims 1 to 9.

## Patentansprüche

1. Verfahren zum Vorabrufen eines Einbettungsvektors, das umfasst:
Ablesen, durch einen Prozessor (111), eines Salts und eines ersten Einbettungsvektorschlüsselworts;
Bestimmen, durch den Prozessor basierend auf dem Salt und dem ersten Einbettungsvektorschlüsselwort, eines Beschleunigers, der dem ersten Einbettungsvektorschlüsselwort entspricht, der umfasst:
Bestimmen, durch den Prozessor (111), eines ersten Hash-Werts basierend auf dem ersten Einbettungsvektorschlüsselwort;
Bestimmen, durch den Prozessor (111), eines zweiten Hash-Werts basierend auf dem Salt und dem ersten Hash-Wert;
Umwandeln, durch den Prozessor (111), des zweiten Hash-Werts in eine digitale Form, Erhalten einer Anzahl n von Beschleunigern in einem System und Substituieren des zweiten Hash-Werts und der Anzahl n in eine Modulo-n-Abbildungsbeziehung, um den Beschleuniger zu bestimmen, der dem ersten Einbettungsvektorschlüsselwort entspricht; und
Bestimmen, durch den Prozessor (111), ob ein Einbettungsvektorüberlauf auf dem Beschleuniger (120) auftritt, und Senden, durch den Prozessor, eines ersten Einbettungsvektors an den Beschleuniger (120), falls kein Einbettungsvektorüberlauf auftritt; oder Überspringen des Sendens, durch den Prozessor (111), eines ersten Einbettungsvektors an den Beschleuniger (120) und Gespeicherthalten des ersten Einbettungsvektors in einem ersten Speicher (112), falls der Einbettungsvektorüberlauf auftritt.

2. Verfahren nach Anspruch 1, wobei
das Salt eine Zeichenfolge, die ein oder mehrere zufällig erzeugte Zeichen umfasst, oder eine Zeichenfolge, die in einer Konfigurationsdatei gespeichert ist, ist.

3. Verfahren nach Anspruch 1 oder 2, wobei das Bestimmen, durch den Prozessor (111), eines ersten Hash-Werts basierend auf dem ersten Einbettungsvektorschlüsselwort umfasst:
Eingeben, durch den Prozessor, des ersten Einbettungsvektorschlüsselworts in einen ersten Hash-Algorithmus, um den ersten Hash-Wert zu bestimmen, wobei der erste Hash-Algorithmus einen Message-Digest-Algorithmus oder einen Secure-Hash-Algorithmus umfasst.

4. Verfahren nach einem der vorstehenden Ansprüche, wobei das Bestimmen, durch den Prozessor (111), eines zweiten Hash-Werts basierend auf dem Salt und dem ersten Hash-Wert umfasst:
Kombinieren, durch den Prozessor (111), des Salts und des ersten Hash-Werts, um einen ersten Salted-Hash-Wert zu erhalten; und
Eingeben, durch den Prozessor (111), des ersten Salted-Hash-Werts in einen zweiten Hash-Algorithmus, um den zweiten Hash-Wert zu bestimmen.

5. Verfahren nach Anspruch 4, wobei das Kombinieren, durch den Prozessor, des Salts und des ersten Hash-Werts, um einen ersten Salted-Hash-Wert zu erhalten, umfasst: Durchführen, durch den Prozessor (111), einer Zeichenfolgenverkettung an dem ersten Hash-Wert und dem Salt, um den ersten Salted-Hash-Wert zu erhalten.

6. Verfahren nach Anspruch 4, wobei das Kombinieren, durch den Prozessor (111), des Salts und des ersten Hash-Werts, um einen ersten Salted-Hash-Wert zu erhalten, umfasst:
Einfügen, durch den Prozessor (111), des Salts in eine oder mehrere Positionen in dem ersten Hash-Wert, um den ersten Salted-Hash-Wert zu erhalten.

7. Verfahren nach einem der Ansprüche 1 bis 6, wobei
das Senden, durch den Prozessor (111), eines ersten Einbettungsvektors an den Beschleuniger (120), falls kein Einbettungsvektorüberlauf auftritt, umfasst:
falls kein Einbettungsvektorüberlauf auftritt, Finden, durch den Prozessor (111), des entsprechenden ersten Einbettungsvektors aus einer Einbettungstabelle basierend auf dem ersten Einbettungsvektorschlüsselwort, und Senden des ersten Einbettungsvektors an einen Cache des Beschleunigers (120); und
das Überspringen des Sendens, durch den Prozessor, eines ersten Einbettungsvektors an den Beschleuniger und das Gespeicherthalten des ersten Einbettungsvektors in einem ersten Speicher, falls der Einbettungsvektorüberlauf auftritt, umfasst:
falls der Einbettungsvektorüberlauf auftritt, Überspringen des Sendens, durch den Prozessor, des ersten Einbettungsvektors an den Beschleuniger, Ablesen eines neuen Salts und Speichern des neuen Salts in einer Konfigurationsdatei.

8. Verfahren nach Anspruch 1, wobei die Modulo-n-Abbildungsbeziehung dargestellt wird als:$dev = hash \left(hash\left(key\right)⊗salt\right) mod n ,$ wobei dev die Beschleunigerinformationen darstellt und hash (hash (key) ⊗ *salt*) der zweite Hash-Wert ist.

9. Verfahren nach Anspruch 8, wobei mod eine Abbildungsbeziehung, die den zweiten Hash-Wert auf den Beschleuniger abbildet, darstellt.

10. Einrichtung (300) zum Vorabrufen eines Einbettungsvektors, wobei die Einrichtung (300) umfasst:
eine Erhaltungseinheit (320), die konfiguriert ist, um ein Salt und ein erstes Einbettungsvektorschlüsselwort zu erhalten;
eine Hash-Betriebseinheit (330), die konfiguriert ist, um basierend auf dem Salt und dem ersten Einbettungsvektorschlüsselwort einen Beschleuniger zu bestimmen, der dem ersten Einbettungsvektorschlüsselwort entspricht, wobei das Bestimmen umfasst:
Bestimmen eines ersten Hash-Werts basierend auf dem ersten Einbettungsvektorschlüsselwort;
Bestimmen eines zweiten Hash-Werts basierend auf dem Salt und dem ersten Hash-Wert;
Umwandeln des zweiten Hash-Werts in eine digitale Form,
Erhalten einer Anzahl n von Beschleunigern in einem System und Substituieren des zweiten Hash-Werts und der Anzahl n in eine Modulo-n-Abbildungsbeziehung, um den Beschleuniger zu bestimmen, der dem ersten Einbettungsvektorschlüsselwort entspricht;
eine Vergleichseinheit (340), die konfiguriert ist, um zu bestimmen, ob der Einbettungsvektorüberlauf auf dem Beschleuniger auftritt; und
eine Datenausgabeeinheit (350), die konfiguriert ist zum: falls kein Einbettungsvektorüberlauf auftritt, Senden eines ersten Einbettungsvektors an den Beschleuniger; oder falls der Einbettungsvektorüberlauf auftritt, Überspringen des Sendens eines ersten Einbettungsvektors an den Beschleuniger.

11. Einrichtung nach Anspruch 10, wobei das Salt eine Zeichenfolge, die ein oder mehrere zufällig erzeugte Zeichen umfasst, oder eine Zeichenfolge, die in einer Konfigurationsdatei gespeichert ist, ist.

12. Einrichtung nach Anspruch 10 oder 11, wobei die Hash-Betriebseinheit (330) konfiguriert ist, um das erste Einbettungsvektorschlüsselwort in einen ersten Hash-Algorithmus einzugeben, um den ersten Hash-Wert zu bestimmen, wobei der erste Hash-Algorithmus einen Message-Digest-Algorithmus oder einen Secure-Hash-Algorithmus umfasst.

13. Computerlesbares Speicherungsmedium, das Anweisungen umfasst, die, wenn sie durch eine Computervorrichtung ausgeführt werden, die Computervorrichtung veranlassen, das Verfahren nach einem der Ansprüche 1 bis 9 vorzunehmen.

## Revendications

1. Procédé de prélecture de vecteur de plongement, comprenant :
la lecture, par un processeur (111), d'un sel et d'un premier mot-clé de vecteur de plongement ;
la détermination, par le processeur sur la base du sel et du premier mot-clé de vecteur de plongement, d'un accélérateur correspondant au premier mot-clé de vecteur de plongement, comprenant :
la détermination, par le processeur (111), d'une première valeur de hachage sur la base du premier mot-clé de vecteur de plongement ;
la détermination, par le processeur (111), d'une seconde valeur de hachage sur la base du sel et de la première valeur de hachage ;
la conversion, par le processeur (111), de la seconde valeur de hachage en une forme numérique, l'obtention d'une quantité n d'accélérateurs dans un système, et la substitution de la seconde valeur de hachage et de la quantité n dans une relation de mappage modulo n, pour déterminer l'accélérateur correspondant au premier mot-clé de vecteur de plongement ; et
le fait de déterminer, par le processeur (111), si un débordement de vecteurs de plongement se produit sur l'accélérateur (120), et l'envoi, par le processeur, d'un premier vecteur de plongement à l'accélérateur (120) si aucun débordement de vecteurs de plongement ne se produit ; ou l'omission de l'envoi, par le processeur (111), d'un premier vecteur de plongement à l'accélérateur (120), et la conservation du premier vecteur de plongement stocké dans une première mémoire (112), si le débordement de vecteurs de plongement se produit.

2. Procédé selon la revendication 1, dans lequel
le sel est une chaîne de caractères comprenant un ou plusieurs caractères générés aléatoirement, ou une chaîne de caractères stockée dans un fichier de configuration.

3. Procédé selon la revendication 1 ou la revendication 2, dans lequel la détermination, par le processeur (111), d'une première valeur de hachage sur la base du premier mot-clé de vecteur de plongement comprend :
l'entrée, par le processeur, du premier mot-clé de vecteur de plongement dans un premier algorithme de hachage, pour déterminer la première valeur de hachage, dans lequel
le premier algorithme de hachage comprend un algorithme de condensé de message ou un algorithme de hachage sécurisé.

4. Procédé selon l'une quelconque revendication précédente, dans lequel la détermination, par le processeur (111), d'une seconde valeur de hachage sur la base du sel et de la première valeur de hachage comprend :
la combinaison, par le processeur (111), du sel et de la première valeur de hachage, pour obtenir une première valeur de hachage salée ; et
l'entrée, par le processeur (111), de la première valeur de hachage salée dans un second algorithme de hachage, pour déterminer la seconde valeur de hachage.

5. Procédé selon la revendication 4, dans lequel la combinaison, par le processeur, du sel et de la première valeur de hachage, pour obtenir une première valeur de hachage salée comprend :
la réalisation, par le processeur (111), d'une concaténation de chaînes de caractères sur la première valeur de hachage et le sel, pour obtenir la première valeur de hachage salée.

6. Procédé selon la revendication 4, dans lequel la combinaison, par le processeur (111), du sel et de la première valeur de hachage, pour obtenir une première valeur de hachage salée comprend :
l'insertion, par le processeur (111), du sel dans une ou plusieurs positions dans la première valeur de hachage, pour obtenir la première valeur de hachage salée.

7. Procédé selon l'une quelconque des revendications 1 à 6, dans lequel l'envoi, par le processeur (111), d'un premier vecteur de plongement à l'accélérateur (120) si aucun débordement de vecteurs de plongement ne se produit comprend :
si aucun débordement de vecteurs de plongement ne se produit, la recherche, par le processeur (111), du premier vecteur de plongement correspondant à partir d'une table de plongement sur la base du premier mot-clé de vecteur de plongement, et l'envoi du premier vecteur de plongement à une mémoire cache de l'accélérateur (120) ; et
l'omission de l'envoi, par le processeur, d'un premier vecteur de plongement à l'accélérateur, et la conservation du premier vecteur de plongement stocké dans une première mémoire, si le débordement de vecteurs de plongement se produit comprend :
si le débordement de vecteurs de plongement se produit, l'omission de l'envoi, par le processeur, du premier vecteur de plongement à l'accélérateur, la lecture d'un nouveau sel, et le stockage du nouveau sel dans un fichier de configuration.

8. Procédé selon la revendication 1, dans lequel la relation de mappage modulo n est représentée comme suit :$dev = hash \left(hash\left(key\right)⊗salt\right) mod n ,$ où dev représente les informations d'accélérateur, et hash (hash (key) ⊗ *salt*) représente la seconde valeur de hachage.

9. Procédé selon la revendication 8, dans lequel mod représente une relation de mappage qui mappe la seconde valeur de hachage avec l'accélérateur.

10. Appareil de prélecture de vecteur de plongement (300), dans lequel l'appareil (300) comprend :
une unité d'obtention (320), configurée pour obtenir un sel et un premier mot-clé de vecteur de plongement ;
une unité d'opération de hachage (330), configurée pour déterminer, sur la base du sel et du premier mot-clé de vecteur de plongement, un accélérateur correspondant au premier mot-clé de vecteur de plongement, la détermination comprenant :
la détermination d'une première valeur de hachage sur la base du premier mot-clé de vecteur de plongement ;
la détermination d'une seconde valeur de hachage sur la base du sel et de la première valeur de hachage ;
la conversion de la seconde valeur de hachage en une forme numérique,
l'obtention d'une quantité n d'accélérateurs dans un système, et la substitution de la seconde valeur de hachage et de la quantité n dans une relation de mappage modulo n, pour déterminer l'accélérateur correspondant au premier mot-clé de vecteur de plongement ;
une unité de comparaison (340), configurée pour déterminer si un débordement de vecteurs de plongement se produit sur l'accélérateur ; et
une unité de sortie de données (350), configurée pour : si aucun débordement de vecteurs de plongement ne se produit, envoyer un premier vecteur de plongement à l'accélérateur ; ou si le débordement de vecteurs de plongement se produit, omettre l'envoi d'un premier vecteur de plongement à l'accélérateur.

11. Appareil selon la revendication 10, dans lequel le sel est une chaîne de caractères comprenant un ou plusieurs caractères générés aléatoirement, ou une chaîne de caractères stockée dans un fichier de configuration.

12. Appareil selon la revendication 10 ou la revendication 11, dans lequel l'unité d'opération de hachage (330) est configurée pour entrer le premier mot-clé de vecteur de plongement dans un premier algorithme de hachage, pour déterminer la première valeur de hachage, dans lequel le premier algorithme de hachage comprend un algorithme de condensé de message ou un algorithme de hachage sécurisé.

13. Support de stockage lisible par ordinateur comprenant des instructions qui, lorsqu'elles sont exécutées par un dispositif informatique, amènent le dispositif informatique à mettre en œuvre le procédé selon l'une quelconque des revendications 1 à 9.
